# FASCICULE DE BREVET EUROPEEN

(11) **EP 3 404 773 B1**
(45) Date de publication et mention de la délivrance du brevet: **19.08.2020**
(21) Numéro de dépôt: 18172960.9
(22) Date de dépôt: 17.05.2018
(51) Int. Cl.: H01R 4/64, F16L 3/10, F16L 25/01, F16L 3/223, F16L 55/035, H01R 4/60, F16L 3/237

(54) **DISPOSITIF DE MAINTIEN D'AU MOINS UN TUYAU CONDUCTEUR ELECTRIQUE SUR UNE STRUCTURE CONDUCTRICE ELECTRIQUE**
HALTEVORRICHTUNG MINDESTENS EINES ELEKTRISCH LEITENDEN ROHRS AUF EINER ELEKTRISCH LEITFÄHIGEN STRUKTUR
DEVICE FOR HOLDING AT LEAST ONE ELECTRICALLY CONDUCTIVE PIPE ON AN ELECTRICALLY CONDUCTIVE STRUCTURE

(30) Priorité: 19.05.2017 FR 1754430
(43) Date de publication de la demande: 21.11.2018
(73) Titulaire: Amphenol - Air LB, 08110 Carignan (FR)
(72) Inventeur: CAYZAC, Gaspard, 08370 Margut (FR)
(74) Mandataire: Cabinet Bleger-Rhein-Poupon

(56) Documents cités:
- EP-A2- 0 139 980
- WO-A1-2011/053573
- FR-A1- 2 260 199
- US-A- 2 417 260
- US-A1- 2015 102 600

## Description

La présente invention a trait à un dispositif de maintien d'au moins un tuyau conducteur électrique sur une structure conductrice électrique avec une liaison électrique entre une telle structure et au moins un tel tuyau.

L'invention concerne le domaine de la fabrication des équipements destinés à assurer le maintien d'au moins un tuyau d'une tuyauterie sur une structure tout en assurant une mise à la masse de ce ou de ces tuyaux.

Cette invention trouvera une application particulièrement appropriée pour maintenir une tuyauterie susceptible d'adopter, par rapport à la structure, un mouvement, notamment un glissement et/ou de faible amplitude. Cette invention trouvera, également, une application particulièrement appropriée pour maintenir une tuyauterie au sein d'un environnement susceptible d'occasionner des dégradations à une telle tuyauterie comme une atmosphère corrosive (par exemple une atmosphère saline) et/ou humide (par exemple dans laquelle la tuyauterie est soumise à des projections d'eau) et/ou polluante (par exemple poussiéreuse). Finalement et sans que la présente invention y soit limitée, cette invention trouvera une utilité particulière dans le domaine aéronautique lorsqu'il s'agit d'assurer le maintien d'une tuyauterie sur une structure, ceci à l'intérieur d'un aéronef.

L'on connait, d'ores et déjà, des dispositifs de maintien d'au moins un tuyau conducteur électrique sur une structure conductrice électrique avec une liaison électrique entre une telle structure et au moins un tel tuyau.

Un tel dispositif adopte la forme d'une bride, comportant, d'une part, une demi-bride de fixation destinée à être fixée sur la structure et comportant au moins un creux pour la réception d'au moins un tuyau et, d'autre part, une demi-bride de maintien, destinée à être assemblée avec la demi-bride de fixation, et comportant au moins un autre creux, réalisé en correspondance avec le ou les creux de la demi-bride de fixation, et définissant, avec ce ou ces creux, un ou plusieurs logements pour la réception d'un ou plusieurs tuyaux. Ce dispositif de maintien est complété par des moyens de liaison électrique conçus pour relier électriquement la structure et le ou les tuyaux. Ces moyens de liaison électrique comportent, d'une part, au moins un collier, chacun destiné à être fixé autour d'un tuyau ou de l'un des tuyaux, et, d'autre part, au moins une tresse métallique, chacune raccordée à un collier ainsi qu'à une patte de fixation que comporte la structure ou à un autre collier lui-même raccordé à une telle patte de fixation.

Un tel dispositif présente plusieurs inconvénients. En particulier, les moyens de liaison électrique constituent des moyens additionnels et indépendants du dispositif de maintien qui nécessitent, pour leur mise en place, une étape supplémentaire et indépendante de la fixation du ou des tuyaux sur la structure. De plus, la mise en place de ces moyens de liaison électrique s'avère être une étape longue et fastidieuse, notamment en raison des difficultés d'accès dus à la proximité entre la structure et la tuyauterie et/ou entre les tuyaux de cette tuyauterie, voire encore dus à l'environnement encombré du dispositif de maintien, plus particulièrement à l'intérieur d'un aéronef. En outre, l'utilisation de tels moyens de liaison électrique nécessite de prévoir, au niveau de la structure, au moins une patte de fixation.

On connait, également, un autre dispositif de maintien adoptant la forme d'une bride, comportant, là encore, d'une part, une demi-bride de fixation destinée à être fixée sur la structure et comportant au moins un creux pour la réception d'au moins un tuyau et, d'autre part, une demi-bride de maintien, destinée à être assemblée avec la demi-bride de fixation, et comportant au moins un autre creux, chacun réalisé en correspondance avec le ou les creux de la demi-bride de fixation, et définissant, avec ce ou ces creux, un ou plusieurs logements pour la réception d'un ou plusieurs tuyaux. La demi-bride de fixation de ce dispositif de maintien comporte, encore, des moyens de liaison électrique pour relier électriquement la structure et le ou les tuyaux. Ces moyens de liaison électrique comportent, d'une part, au moins un berceau rigide et conducteur électrique, chacun disposé dans le fond d'un creux de cette demi-bride de fixation, et chacun conçu pour coopérer directement avec un tuyau, d'autre part, au moins un ressort conducteur électrique, qui coopère avec un tel berceau, et qui est conçu pour repousser un tel berceau en direction d'un tel tuyau et, d'autre part encore, un rail conducteur électrique, avec lequel coopèrent le ou les ressorts, et qui coopère avec la structure conductrice électrique.

Un tel dispositif de maintien présente, cependant, de nombreux inconvénients. En fait, les demi-brides (en particulier les berceaux) sont, usuellement, réalisées en aluminium tandis que le ou les tuyaux sont, usuellement, réalisés en acier ou en titane. Il en résulte un couple galvanique directement responsable de la corrosion de ce ou ces tuyaux. De plus, pour réaliser la conductivité électrique entre un berceau et un tuyau, il est nécessaire de supprimer localement la peinture protectrice anticorrosion d'un tel tuyau. Or, le dispositif de maintien pouvant être implanté dans une atmosphère corrosive (par exemple une atmosphère saline) et/ou humide (par exemple dans laquelle la tuyauterie est soumise à des projections d'eau), l'absence de traitement anticorrosion provoque une corrosion d'un tel tuyau. Un autre inconvénient consiste en ce que, entre un tel tuyau et les moyens de liaison électrique (plus particulièrement le ou les berceaux de ces moyens de liaison électrique), se produit une accumulation de particules polluantes (par exemple de la poussière) qui a tendance à amoindrir, voir à empêcher, la conduction électrique entre un tel tuyau et la structure. Finalement, le déplacement d'un tel tuyau par rapport aux demi-brides (notamment, par rapport à un berceau que comporte la demi-bride de fixation), occasionne des dégradations à un tel tuyau et/ou à une telle demi-bride (notamment sous forme de copeaux de matière arrachée).

Par le document US 2417260, on connait un dispositif de maintien d'au moins un tuyau conducteur électrique sur une structure conductrice électrique avec une liaison électrique entre une telle structure et au moins un tel tuyau. Ce dispositif de maintien comporte, d'une part, une première demi-bride et, d'autre part, une deuxième demi-bride, configurée pour être assemblée avec la première demi-bride, et complémentaire à cette première demi-bride. Ces demi-brides comportent chacune un corps ainsi que, chacune, en vis-à-vis de l'autre demi-bride, d'une part, au moins un creux, chacun configuré pour recevoir un tuyau, chacun agencé en vis-à-vis d'un autre creux que comporte l'autre demi-bride, et chacun complétant un tel autre creux pour former un logement pour la réception du tuyau ou de l'un des tuyaux. Ce dispositif comporte, encore, d'une part, de part et d'autre des demi-brides, un élément de cadre, d'autre part, une entretoise s'étendant entre ces deux éléments de cadre et, d'autre part encore, un boulon, traversant l'entretoise, les deux éléments de cadre ainsi que la structure conductrice électrique.

Ce dispositif de maintien comporte, encore, des moyens de liaison électrique, qui sont configurés pour relier électriquement la structure et le ou les tuyaux, et que comportent les demi-brides. Ces moyens de liaison électrique adoptent la forme d'une fine bande métallique flexible, qui est configurée pour coopérer avec un tuyau, qui garnit le creux d'une telle demi-bride, et qui s'étend sur une partie du pourtour d'une telle demi-bride, en particulier sur un côté d'une telle demi-bride qui est en contact avec un élément de cadre qui est lui-même en contact avec la structure.

Par le document EP0139980 on connait, aussi, un serre-câble comprenant deux pièces de serrage qui peuvent être interconnectées, qui sont matérialisées par des éléments en plastique de forme identique, et entre lesquelles un câble peut être serré. Ces deux pièces de serrage comportent, chacune, des ouvertures traversantes à travers lesquelles un ressort de contact peut être poussé. Ces deux pièces de serrage sont chacune séparées l'une de l'autre par une âme. Ces deux pièces de serrage comportent, chacune, des moyens de verrouillage en prise mutuelle avec des surfaces proches les unes des autres.

Finalement, le document FR2260199 divulgue un ensemble de serrage comprenant une paire de rails, qui présentent chacun un canal, qui sont superposés, et qui sont positionnés en sorte que leurs canaux soit face à face. Cet ensemble comprend, encore, au moins une paire de mâchoires en matériau isolant et au moins une mâchoire ayant une bande de mise à la terre métallique connectée électriquement à un élément métallique ayant une partie généralement cylindrique pour établir une connexion électrique entre un rail et un élément allongé maintenu transversalement par rapport aux mâchoires sur les rails.

La présente invention se veut de remédier aux inconvénients des dispositifs de maintien de l'état de la technique.

A cet effet, l'invention concerne un dispositif de maintien d'au moins un tuyau conducteur électrique sur une structure conductrice électrique avec une liaison électrique entre une telle structure et au moins un tel tuyau. Ce dispositif de maintien comporte une bride comportant, d'une part, une demi-bride de fixation configurée pour être fixée sur la structure et, d'autre part, une demi-bride de maintien, configurée pour être assemblée avec la demi-bride de fixation, et complémentaire à cette demi-bride de fixation, ces demi-brides comportant chacune un corps rigide ainsi que, chacune, en vis-à-vis de l'autre demi-bride, d'une part, au moins un creux, chacun configuré pour recevoir un tuyau, chacun agencé en vis-à-vis d'un autre creux que comporte l'autre demi-bride, et chacun complétant un tel autre creux pour former un logement pour la réception du tuyau ou de l'un des tuyaux. Ce dispositif de maintien comporte, encore, des moyens de liaison électrique, qui sont configurés pour relier électriquement la structure et le ou les tuyaux, et que comporte la demi-bride de fixation.

Ce dispositif de maintien est caractérisé par le fait que les moyens de liaison électrique comportent, d'une part, au moins un coussinet, chacun réalisé en un matériau souple conducteur électrique, chacun garnissant le creux ou l'un des creux de la demi-bride de fixation, et chacun configuré pour coopérer électriquement avec le tuyau ou avec l'un des tuyaux et, d'autre part, au moins un poussoir, chacun réalisé en un matériau conducteur électrique, chacun configuré pour coopérer électriquement avec la structure ainsi qu'avec le coussinet ou l'un des coussinets de la demi-bride de fixation, chacun mobile en déplacement entre une position déployée à l'extérieur de la demi-bride de fixation et une position escamotée à l'intérieur de cette demi-bride de fixation.

Une autre caractéristique consiste en ce que la demi-bride de maintien comporte au moins un coussinet, chacun réalisé en un matériau souple, chacun garnissant le creux ou l'un des creux de la demi-bride de maintien, et chacun agencé en vis-à-vis du coussinet ou de l'un des coussinets de la demi-bride de fixation.

Une caractéristique additionnelle concerne le fait que le ou les coussinets sont réalisés en un matériau compressible et/ou en silicone tandis que le ou les poussoirs sont réalisés en un matériau rigide et/ou métallique.

Encore une autre caractéristique consiste en ce que la demi-bride de fixation comporte une face de fixation, destinée à être orientée en direction de la structure, voire à coopérer avec cette structure, et par rapport à laquelle le ou les poussoirs s'étendent en saillie, ceci en position déployée.

Selon une autre caractéristique, la demi-bride de fixation comporte au moins un berceau, chacun réalisé en un matériau rigide, chacun garnissant en partie la face interne du coussinet ou de l'un des coussinets de cette demi-bride de fixation, chacun configuré pour coopérer avec le tuyau ou avec l'un des tuyaux ainsi que pour être interposé entre un tel coussinet et un tel tuyau.

Ainsi, le dispositif de maintien comporte des moyens de liaison électrique comportant au moins un coussinet conducteur électrique et au moins un poussoir mobile conducteur électrique. Ces caractéristiques permettent, avantageusement et sous l'effet de la fixation du dispositif de maintien sur la structure, d'assurer une liaison électrique entre cette structure et le ou les tuyaux maintenus par l'intermédiaire de ce dispositif de maintien. Cette liaison électrique est réalisée en même temps que l'étape de fixation du dispositif de maintien sur ladite structure, sans étape additionnelle.

De plus, la présence de ces moyens de liaison électrique (en particulier du ou des coussinets souples) permet, avantageusement, d'assurer une telle liaison électrique tout en autorisant un déplacement du ou des tuyaux par rapport à la structure et en évitant une dégradation de ce ou de ces tuyaux sous l'effet d'un tel déplacement.

En outre, la présence de ces moyens de liaison électrique (en particulier du ou des poussoirs) permet, avantageusement, d'assurer et de maintenir un contact électrique franc, fiable, efficace, et pérenne, d'une part, entre un tel poussoir et la structure, d'autre part, entre un tel poussoir et un coussinet et, d'autre part encore, entre un tel coussinet et un tuyau.

Le dispositif de maintien (plus particulièrement la demi-bride de fixation de ce dispositif de maintien) comporte au moins un berceau rigide, chacun garnissant en partie la face interne d'un coussinet, et chacun configuré pour coopérer avec un tuyau. La présence d'un tel berceau permet, avantageusement, d'une part (et du fait de la configuration d'un tel berceau), d'assurer un contact franc, fiable, efficace, et pérenne d'un tel berceau avec un tuyau et, d'autre part (et du fait du garnissage partiel du coussinet), d'assurer un contact électrique direct entre un tel coussinet et un tel tuyau.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée et en perspective d'un dispositif de maintien conforme à l'invention, ceci dans une configuration correspondant à celle avant la fixation de ce dispositif sur une structure ;
- la figure 2 est une vue schématisée, en perspective, et en coupe longitudinale du dispositif de maintien illustré figure 1 ;
- la figure 3 est une vue schématisée, en perspective et en transparence d'un dispositif de maintien, conforme à l'invention, et fixé sur une structure ;
- la figure 4 est une vue schématisée, en perspective, et en coupe longitudinale du dispositif de maintien conforme à l'invention, ceci dans une configuration correspondant à celle illustrée figure 3 et dans laquelle ce dispositif de maintien est fixé sur la structure.

La présente invention concerne le domaine de la fabrication des équipements destinés à assurer le maintien d'au moins un tuyau d'une tuyauterie sur une structure, ceci tout en assurant une mise à la masse de ce ou de ces tuyaux.

L'invention concerne, alors, plus particulièrement, un dispositif de maintien 1 conçu pour assurer le maintien d'au moins un tuyau conducteur électrique (plus particulièrement d'une pluralité de tuyaux conducteurs électriques et/ou que comporte une tuyauterie) sur une structure S conductrice électrique (plus particulièrement constituée par une paroi métallique), ceci tout en assurant une liaison électrique entre une telle structure S conductrice électrique et au moins un tel tuyau conducteur électrique.

Ce dispositif de maintien 1 comporte une bride 2 configurée pour recevoir au moins un tel tuyau, voire une pluralité de tuyaux, que comporte une tuyauterie.

Cette bride 2 comporte, d'une part, une demi-bride de fixation 3 configurée pour être fixée sur la structure S, ceci par l'intermédiaire de moyens de fixation et, d'autre part, une demi-bride de maintien 4, complémentaire à cette demi-bride de fixation 3, et configurée pour être assemblée avec cette demi-bride de fixation 3, ceci par l'intermédiaire de moyens d'assemblage.

Ces demi-brides (3 ; 4) comportent, chacune, un corps rigide (30 ; 40), plus particulièrement réalisé en un matériau non conducteur électrique, notamment en un matériau plastique et/ou composite.

De plus, ces demi-brides (3 ; 4) comportent, chacune, au moins un moyen de réception (31 ; 41) pour recevoir, selon le cas, des moyens de fixation pour fixer le dispositif de maintien 1 sur la structure S et/ou des moyens d'assemblage pour assembler ces deux demi-brides (3 ; 4).

Selon un mode particulier de réalisation, la demi-bride de fixation 3 (plus particulièrement le corps rigide 30 de cette demi-bride de fixation 3) comporte au moins un moyen de réception 31 chacun adoptant la forme d'un orifice traversant. La demi-bride de maintien 4 (plus particulièrement le corps rigide 40 de cette demi-bride de maintien 4) comporte au moins un moyen de réception 41, chacun adoptant la forme d'un orifice traversant, et chacun situé dans le prolongement de l'orifice traversant d'un moyen de réception 31 de la demi-bride de fixation 3. Dans un pareil cas, les moyens de fixation peuvent être constitués par au moins une vis de fixation, traversant les orifices traversant des moyens de réception (31 ; 41) des demi-brides (3 ; 4) et définissant, avantageusement, des moyens d'assemblage de ces demi-brides (3 ; 4), plus particulièrement conçus pour réaliser l'assemblage de ces demi-brides (3 ; 4) sous l'effet de la fixation du dispositif de maintien 1 sur le structure S.

Ces demi-brides (3 ; 4) comportent, chacune, en vis-à-vis de l'autre demi-bride (4 ; 3), d'une part, au moins un creux (32 ; 42), chacun configuré pour recevoir un tuyau, chacun agencé en vis-à-vis d'un autre creux (42 ; 32) que comporte l'autre demi-bride (4 ; 3), et chacun complétant un tel autre creux (42 ; 32) pour former un logement 5 pour la réception du tuyau ou de l'un des tuyaux.

A ce propos, on observera que le ou les creux (32 ; 42) présentent une forme générale de demi-cercle et/ou présentent un rayon interne supérieur au rayon externe du tuyau de la tuyauterie qu'il reçoit. De plus, le ou les logements 5 présentent une forme correspondant sensiblement à la section du tuyau qu'il reçoit (plus particulièrement une forme circulaire) et/ou présentent un rayon interne supérieur au rayon externe d'un tel tuyau.

Une autre caractéristique consiste en ce que le dispositif de maintien 1 comporte des moyens de liaison électrique 6 qui sont configurés pour relier électriquement la structure S et le ou les tuyaux.

En fait, c'est, plus particulièrement, la demi-bride de fixation 3 qui comporte de tels moyens de liaison électrique 6.

Ces moyens de liaison électrique 6 comportent, d'une part, au moins un coussinet 7, chacun réalisé en un matériau souple conducteur électrique, chacun garnissant le creux 32 ou l'un des creux 32 de la demi-bride de fixation 3, et chacun configuré pour coopérer électriquement avec le tuyau ou avec l'un des tuyaux et, d'autre part, au moins un poussoir 8, chacun réalisé en un matériau conducteur électrique, chacun configuré pour coopérer électriquement avec la structure S ainsi qu'avec le coussinet 7 ou l'un des coussinets 7 de la demi-bride de fixation 3, chacun mobile en déplacement entre une position déployée à l'extérieur de la demi-bride de fixation 3 et une position escamotée à l'intérieur de cette demi-bride de fixation 3.

Tel que mentionné ci-dessus, ces moyens de liaison électrique 6 comportent au moins un coussinet 7 réalisé en un matériau souple conducteur électrique.

Ce ou ces coussinets 7 sont, alors, réalisés en un matériau souple ce qui permet, avantageusement et sous l'effet de l'action d'un poussoir 8, de déformer un tel coussinet 7 et d'amener ce coussinet 7 en contact avec le tuyau ou l'un des tuyaux.

Ce ou ces coussinets 7 sont, de préférence, réalisés en un matériau compressible. Cette caractéristique permet, avantageusement, d'une part, de garantir un maintien efficace et pérenne d'un tel tuyau au sein du dispositif de maintien 1 et, d'autre part, un déplacement d'un tel tuyau par rapport à ce dispositif de maintien 1. Cette caractéristique permet, également, avantageusement et sous l'effet d'un poussoir 8, de garantir une liaison électrique efficace et pérenne entre un tel coussinet 7 et un tuyau.

Selon un mode de réalisation préféré de l'invention, ce ou ces coussinets 7 sont réalisés en silicone.

Une autre caractéristique consiste en ce qu'un tel coussinet 7 présente, d'une part, une face externe 70, orientée en direction d'un creux 32 du corps rigide 30 de la demi-bride de fixation 3, et en contact avec la surface d'un tel creux 32 (plus particulièrement garnissant cette surface) et, d'autre part, une face interne 71, opposée à la face externe 70, destinée à être orientée en direction d'un tuyau, et destinée à coopérer avec un tel tuyau.

Les moyens de liaison électrique 6 comportent, également, au moins un poussoir 8, chacun réalisé en un matériau conducteur électrique. En fait, ce ou ces poussoirs 8 sont, de préférence, réalisés en un matériau rigide et/ou métallique, notamment en aluminium, en acier ou en titane.

Un mode particulier de réalisation consiste en ce qu'un tel poussoir 8 comporte un traitement de surface conçu, d'une part, pour permettre la conduction électrique et, d'autre part, pour empêcher la création d'un couple galvanique entre un tel poussoir 8 et la structure S.

Un tel traitement de surface peut être constitué par un revêtement, que comporte un tel poussoir 8, et qui est constitué par un matériau conducteur électrique, par exemple une silicone conductrice.

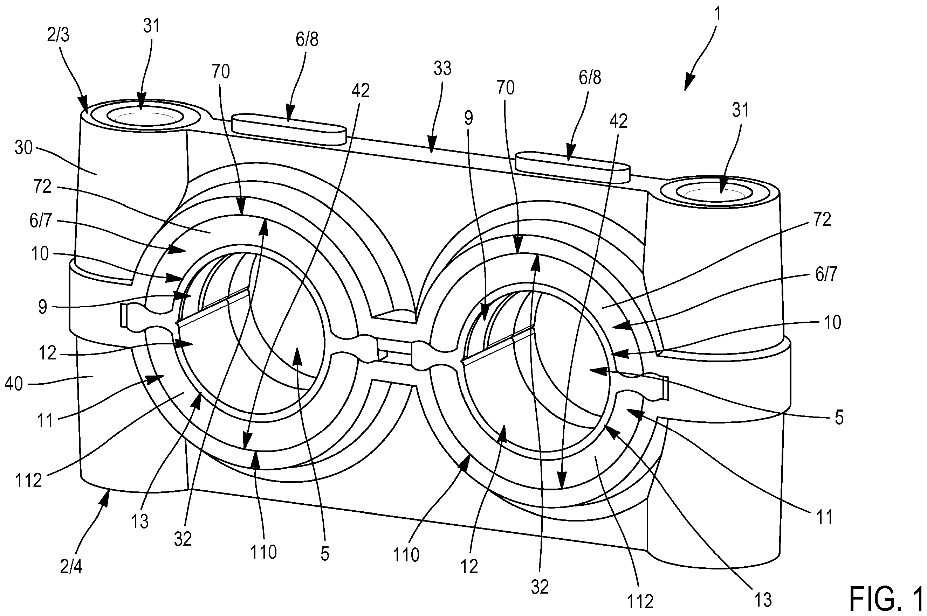

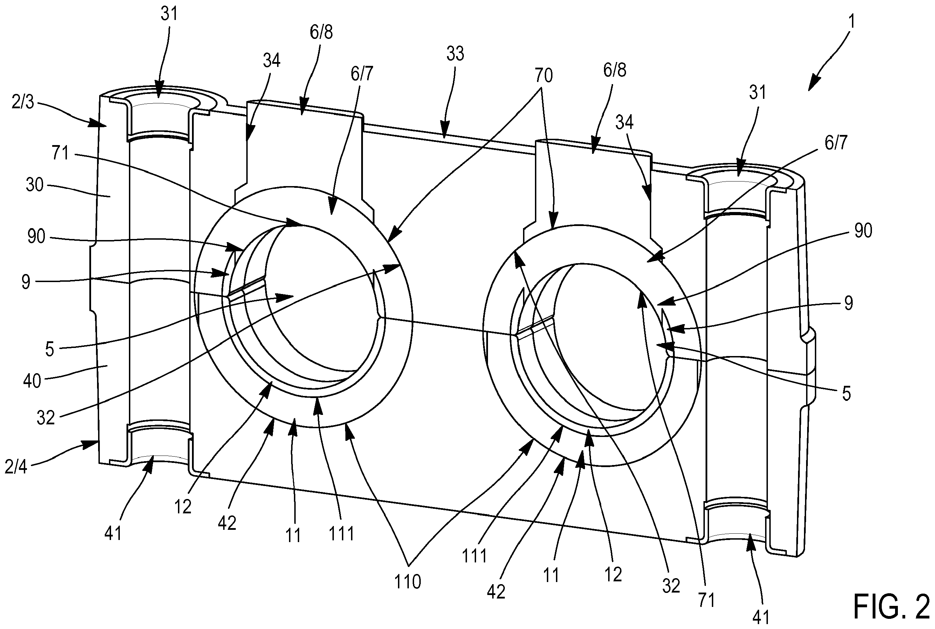

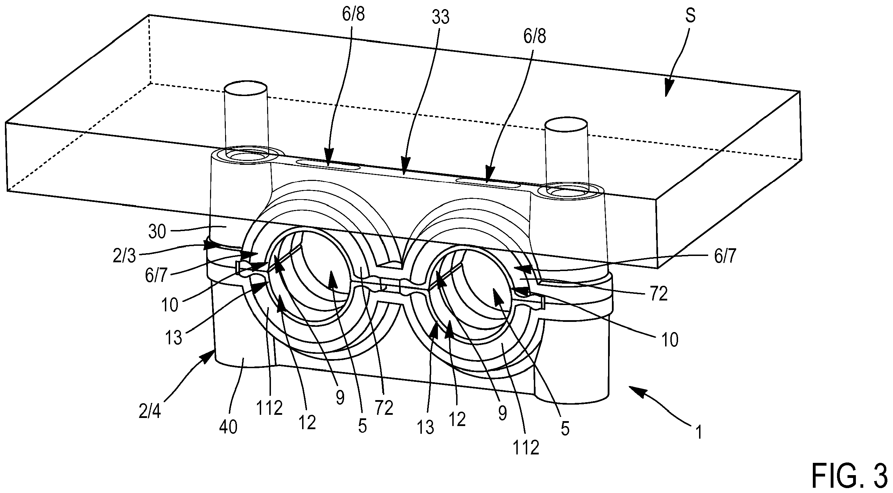

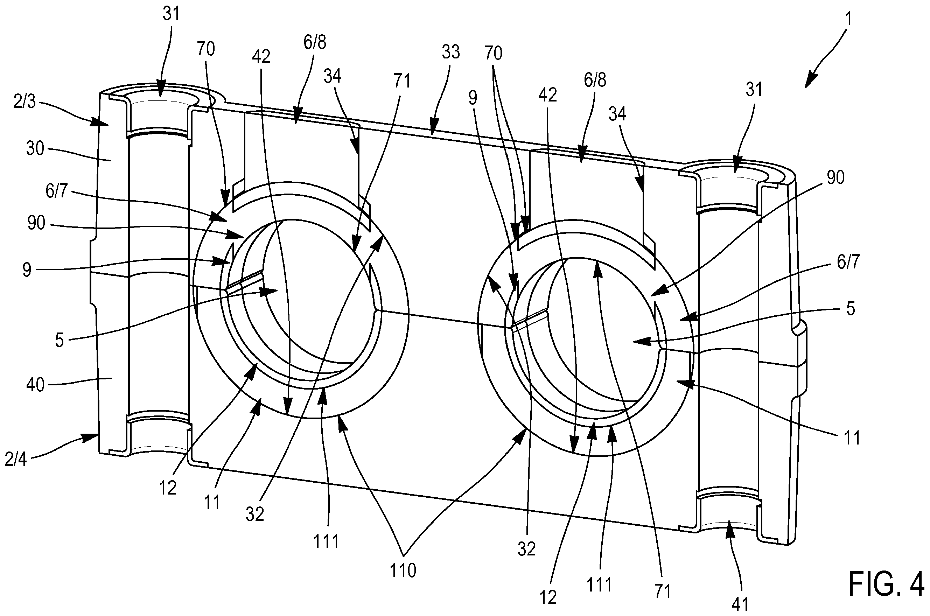

Tel que mentionné ci-dessus, un tel poussoir 8 est mobile en déplacement entre une position déployée à l'extérieur de la demi-bride de fixation 3 (figures 1 et 2) et une position escamotée à l'intérieur de cette demi-bride de fixation 3 (figures 3 et 4).

A ce propos, on observera que cette demi-bride de fixation 3 (plus particulièrement le corps rigide 30 de cette demi-bride de fixation 3) comporte une face de fixation 33, destinée à être orientée en direction de la structure S, voire à coopérer avec cette structure S (plus particulièrement en position de fixation du dispositif de maintien 1 sur cette structure S), et par rapport à laquelle le ou les poussoirs 8 s'étendent en saillie, ceci en position déployée (figures 1 et 2).

Une autre caractéristique de cette demi-bride de fixation 3 consiste en ce qu'elle comporte au moins un orifice traversant 34, chacun s'étendant à partir de cette surface de fixation 33 et jusqu'au creux 32 ou à un des creux 32 de cette demi-bride de fixation 3, et chacun recevant le poussoir 8 ou l'un des poussoirs 8 mobile en translation à l'intérieur d'un tel orifice traversant 34.

A ce propos, on observera qu'un tel orifice traversant 34 traverse, plus particulièrement, le corps rigide 30 de cette demi-bride de fixation 3 tandis qu'un tel poussoir 8 est mobile en translation à l'intérieur d'un tel orifice traversant 34, ceci entre ladite position déployée (figures 1 et 2) et la position escamotée (figures 3 et 4) d'un tel poussoir 8.

Encore une autre caractéristique de la demi-bride de fixation 3 concerne le fait que celle-ci comporte au moins un berceau 9, chacun réalisé en un matériau rigide, chacun garnissant en partie la face interne 71 du coussinet 7 ou de l'un des coussinets 7 de cette demi-bride de fixation 3, chacun configuré pour coopérer avec le tuyau ou avec l'un des tuyaux ainsi que pour être interposé entre un tel coussinet 7 et un tel tuyau.

Ainsi, un tel berceau 9 garnit en partie seulement la face interne du coussinet 7 ou de l'un des coussinets 7 de la demi-bride de fixation 3.

Le fait qu'un tel berceau 9 garnisse une partie seulement de la face interne 71 d'un tel coussinet 7 permet, avantageusement, à un tel coussinet 7 de s'étendre à travers un tel berceau 9 et d'être en contact direct avec un tuyau ou avec l'un des tuyaux (ceci par l'intermédiaire de sa face interne 71) .

A ce propos, on observera que le ou les berceaux 9 comportent, chacun, une ouverture traversante 90 en direction de laquelle le poussoir 8 ou l'un des poussoirs 8 est orienté et est mobile en déplacement.

La présence d'une telle ouverture traversante 90 permet, alors avantageusement, au coussinet 7 de traverser le berceau 9 et de réaliser un contact direct entre ce coussinet 7 et le tuyau ou l'un des tuyaux, ceci sous l'effet du déplacement du poussoir 8.

Une caractéristique additionnelle consiste en ce qu'une telle ouverture traversante 90 est ménagée dans une partie médiane du berceau 9, plus particulièrement dans une partie médiane de la largeur de ce berceau 9, ceci en regard d'une partie médiane du coussinet 7, plus particulièrement dans une partie médiane de la largeur d'un tel coussinet 7.

Cette caractéristique permet, avantageusement et pour réaliser une liaison électrique entre un tel coussinet 7 et un tuyau, de supprimer le revêtement de protection anticorrosion d'un tel tuyau, ceci de manière particulièrement localisée et en un endroit, situé à l'intérieur de la demi-bride de fixation 3, et protégé vis-à-vis des agressions du milieu extérieur (atmosphère humide et/ou corrosive) du dispositif de maintien 1.

Tel que mentionné ci-dessus, un tel berceau 9 est configuré pour coopérer avec le tuyau ou avec l'un des tuyaux.

A ce propos, on observera qu'un tel berceau 9 est configuré pour coopérer de manière intime et au travers de la majeure partie (voire de l'intégralité) de la surface de la face interne de ce berceau 9 orientée en direction d'un tel tuyau. En fait et pour ce faire, un tel berceau 9 présente une forme (plus particulièrement la forme d'un demi-cercle) et/ou des dimensions (plus particulièrement un rayon interne) ajustées à celles d'un tel tuyau.

Selon un mode de réalisation préféré, un tel berceau 9 présente, alors, un rayon interne correspondant au rayon externe d'un tel tuyau.

Une caractéristique additionnelle consiste en ce que le ou les berceaux 9 de la demi-bride de fixation 3 comportent chacun, latéralement et de part et d'autre du coussinet 7 ou de l'un des coussinets 7 de la demi-bride de fixation 3, une jupe 10 couvrant au moins une partie du flanc 72 de ce ou de ces coussinets 7 de cette demi-bride de fixation 3.

Cette caractéristique permet, avantageusement, d'empêcher une pénétration de substances polluantes entre un tel coussinet 7 et un tel berceau 9, malgré un déplacement d'un tuyau qui pourrait avoir tendance à générer un interstice entre un tel coussinet 7 et un tel berceau 9.

Finalement, un tel berceau 9 que comporte la demi-bride de fixation 3 peut être réalisé en un matériau conducteur électrique. Cependant et selon un mode de réalisation préféré, un tel berceau 9 est réalisé en un matériau non conducteur électrique, plus particulièrement en un matériau isolant.

Selon une autre caractéristique du dispositif de maintien 1, la demi-bride de maintien 4 comporte au moins un coussinet 11, chacun réalisé en un matériau souple, chacun garnissant le creux 42 ou l'un des creux 42 de cette demi-bride de maintien 4, et chacun agencé en vis-à-vis du coussinet 7 ou de l'un des coussinets 7 de la demi-bride de fixation 3.

Ce ou ces coussinets 11 de la demi-bride de maintien 4 sont, de préférence, réalisés en un matériau compressible. Cette caractéristique permet, là encore et avantageusement, d'une part, de garantir un maintien efficace et pérenne d'un tel tuyau au sein du dispositif de maintien 1 et, d'autre part, un déplacement d'un tel tuyau par rapport à ce dispositif de maintien 1.

Selon un mode de réalisation préféré de l'invention, ce ou ces coussinets 11 de la demi-bride de maintien 4 sont, là encore, réalisés en silicone.

Une autre caractéristique consiste en ce qu'un tel coussinet 11 présente, d'une part, une face externe 110, orientée en direction d'un creux 42 du corps rigide 40 de la demi-bride de maintien 4, et en contact avec la surface d'un tel creux 42 (plus particulièrement garnissant cette surface) et, d'autre part, une face interne 111, opposée à la face externe 110, et destinée à être orientée en direction d'un tuyau.

On observera que le coussinet 11 (ou l'un des coussinets 11) de la demi-bride de maintien 4 et le coussinet 7 (ou l'un des coussinets 11) de la demi-bride de fixation 3 sont agencés au sein du dispositif de maintien 1, ceci en sorte de former substantiellement un élément de forme annulaire.

Encore une autre caractéristique de la demi-bride de maintien 4 concerne le fait que celle-ci comporte au moins un berceau 12, chacun réalisé en un matériau rigide, chacun garnissant la face interne 111 du coussinet 11 ou de l'un des coussinets 11 de cette demi-bride de maintien 4, et chacun configuré pour coopérer avec le tuyau ou avec l'un des tuyaux ainsi que pour être interposé entre un tel coussinet 11 et un tel tuyau.

Ainsi, un tel berceau 12 garnit la face interne du coussinet 11 ou de l'un des coussinets 11 de la demi-bride de maintien 4. Selon un mode de réalisation préféré, un tel berceau 12 garnit intégralement la face interne d'un tel coussinet 11.

Tel que mentionné ci-dessus, un tel berceau 12 est configuré pour coopérer avec le tuyau ou avec l'un des tuyaux.

A ce propos, on observera qu'un tel berceau 12 est, là encore, configuré pour coopérer de manière intime et au travers de la majeure partie (voire de l'intégralité) de la surface de la face interne de ce berceau 12 orientée en direction d'un tel tuyau. Là encore et pour ce faire, un tel berceau 12 présente une forme (plus particulièrement la forme d'un demi-cercle) et/ou des dimensions (plus particulièrement un rayon interne) ajustées à celles d'un tel tuyau.

Selon un mode de réalisation préféré, un tel berceau 12 présente, alors, un rayon interne correspondant au rayon externe d'un tel tuyau.

Une caractéristique additionnelle consiste en ce que le ou les berceaux 12 de la demi-bride de maintien 4 comportent chacun, latéralement et de part et d'autre du coussinet 11 ou de l'un des coussinets 11 de la demi-bride de maintien 4, une jupe 13 couvrant au moins une partie du flanc 112 de ce ou de ces coussinets 11 de cette demi-bride de maintien 4.

Cette caractéristique permet, là encore et avantageusement, d'empêcher une pénétration de substances polluantes entre un tel coussinet 11 et un tel berceau 12, ceci malgré un déplacement d'un tuyau qui pourrait avoir tendance à générer un interstice entre un tel coussinet 11 et un tel berceau 12.

Un tel berceau 12 que comporte la demi-bride de maintien 4 peut être réalisé en un matériau conducteur électrique ou (et de préférence) en un matériau non conducteur électrique (plus particulièrement en un matériau isolant).

Finalement, on observera que le berceau 12 (ou l'un des berceaux 12) de la demi-bride de maintien 4 et le berceau 9 (ou l'un des berceaux 9) de la demi-bride de fixation 3 sont agencés au sein du dispositif de maintien 1, ceci en sorte de former substantiellement un élément de forme annulaire.

Un tel élément est entouré par l'élément annulaire formé par le coussinet 7 (ou l'un des coussinets 7) de la demi-bride de fixation 3 et par le coussinet 11 (ou l'un des coussinets 11) de la demi-bride de maintien 4.

De plus, un tel élément entoure le tuyau ou l'un des tuyaux de la tuyauterie.

## Revendications

1. Dispositif de maintien (1) d'au moins un tuyau conducteur électrique sur une structure conductrice électrique (S) avec une liaison électrique entre une telle structure (S) et au moins un tel tuyau, ce dispositif de maintien (1) comporte :
- une bride (2) comportant, d'une part, une demi-bride de fixation (3) configurée pour être fixée sur la structure (S) et, d'autre part, une demi-bride de maintien (4), configurée pour être assemblée avec la demi-bride de fixation (3), et complémentaire à cette demi-bride de fixation (3), ces demi-brides (3 ; 4) comportant chacune un corps rigide (30 ; 40) ainsi que, chacune, en vis-à-vis de l'autre demi-bride (4 ; 3), d'une part, au moins un creux (32 ; 42), chacun configuré pour recevoir un tuyau, chacun agencé en vis-à-vis d'un autre creux (42 ; 32) que comporte l'autre demi-bride (4 ; 3), et chacun complétant un tel autre creux (42 ; 32) pour former un logement (5) pour la réception du tuyau ou de l'un des tuyaux ;
- des moyens de liaison électrique (6), qui sont configurés pour relier électriquement la structure (S) et le ou les tuyaux, et que comporte la demi-bride de fixation (3) ; où les moyens de liaison électrique (6) comportent au moins un coussinet (7), chacun réalisé en un matériau souple conducteur électrique, chacun garnissant le creux (32) ou l'un des creux (32) de la demi-bride de fixation (3), et chacun configuré pour coopérer électriquement avec le tuyau ou avec l'un des tuyaux;
**caractérisé par le fait que** les moyens de liaison électrique comportent au moins un poussoir (8), chacun réalisé en un matériau conducteur électrique, chacun configuré pour coopérer électriquement avec la structure (S) ainsi qu'avec le coussinet (7) ou l'un des coussinets (7) de la demi-bride de fixation (3), chacun mobile en déplacement entre une position déployée à l'extérieur de la demi-bride de fixation (3) et une position escamotée à l'intérieur de cette demi-bride de fixation (3).

2. Dispositif de maintien (1) selon la revendication 1, **caractérisé par le fait que** la demi-bride de maintien (4) comporte au moins un coussinet (11), chacun réalisé en un matériau souple, chacun garnissant le creux (42) ou l'un des creux (42) de la demi-bride de maintien (4), et chacun agencé en vis-à-vis du coussinet (11) ou de l'un des coussinets (11) de la demi-bride de fixation (3).

3. Dispositif de maintien (1) selon l'une quelconque des revendications précédentes, **caractérisé par le fait que** le ou les coussinets (7 ; 11) sont réalisés en un matériau compressible.

4. Dispositif de maintien (1) selon l'une quelconque des revendications précédentes, **caractérisé par le fait que** le ou les coussinets (7 ; 11) sont réalisés en silicone.

5. Dispositif de maintien (1) selon l'une quelconque des revendications précédentes, **caractérisé par le fait que** le ou les poussoirs (8) sont réalisés en un matériau rigide et/ou métallique, notamment en aluminium.

6. Dispositif de maintien (1) selon l'une quelconque des revendications précédentes, **caractérisé par le fait que** la demi-bride de fixation (3) comporte une face de fixation (33), destinée à être orientée en direction de la structure (S), voire à coopérer avec cette structure (S), et par rapport à laquelle le ou les poussoirs (8) s'étendent en saillie, ceci en position déployée.

7. Dispositif de maintien (1) selon l'une quelconque des revendications précédentes, **caractérisé par le fait que** la demi-bride de fixation (3) comporte, d'une part, une face de fixation (33), destinée à être orientée en direction de la structure (S), voire à coopérer avec cette structure (S), et, d'autre part, au moins un orifice traversant (34), chacun s'étendant à partir de cette surface de fixation (33) et jusqu'au creux (32) ou à un des creux (32) de cette demi-bride de fixation (3) et, chacun recevant le poussoir (8) ou l'un des poussoirs (8) mobiles en translation à l'intérieur d'un tel orifice traversant (34).

8. Dispositif de maintien (1) selon l'une quelconque des revendications précédentes, **caractérisé par le fait que** la demi-bride de fixation (3) comporte au moins un berceau (9), chacun réalisé en un matériau rigide, chacun garnissant en partie la face interne (71) du coussinet (7) ou de l'un des coussinets (7) de cette demi-bride de fixation (3), chacun configuré pour coopérer avec le tuyau ou avec l'un des tuyaux ainsi que pour être interposé entre un tel coussinet (7) et un tel tuyau.

9. Dispositif de maintien (1) selon la revendication 8, **caractérisé par le fait que** le ou les berceaux (9) de la demi-bride de fixation (3) comportent, chacun, une ouverture traversante (90) en direction de laquelle le poussoir (8) ou l'un des poussoirs (8) est orienté et est mobile en déplacement.

10. Dispositif de maintien (1) selon la revendication 2, **caractérisé par le fait que** la demi-bride de maintien (4) comporte au moins un berceau (12), chacun réalisé en un matériau rigide, chacun garnissant la face interne (111) du coussinet (11) ou de l'un des coussinets (11) de cette demi-bride de maintien (4), et chacun configuré pour coopérer avec le tuyau ou avec l'un des tuyaux ainsi que pour être interposé entre un tel coussinet (11) et un tel tuyau.

11. Dispositif de maintien (1) selon l'une quelconque des revendications 8 à 10, **caractérisé par le fait que** le ou les berceaux (9 ; 12) présentent un rayon interne correspondant au rayon externe du tuyau.

12. Dispositif de maintien (1) selon l'une quelconque des revendications 8 à 11, **caractérisé par le fait que** le ou les berceaux (9 ; 12), comportent chacun, latéralement et de part et d'autre du coussinet (7 ; 11) ou de l'un des coussinets (7 ; 11), une jupe (10 ; 13) couvrant au moins une partie du flanc (72 ; 112) de ce ou de ces coussinets (7 ; 11).

## Patentansprüche

1. Vorrichtung zum Halten (1) von mindestens einem elektrisch leitfähigen Schlauch an einer elektrisch leitfähigen Struktur (S) mit einer elektrischen Verbindung zwischen einer solchen Struktur (S) und mindestens einem solchen Schlauch, diese Haltevorrichtung (1) umfasst:
- einen Flansch (2), der einerseits einen Befestigungshalbflansch (3), der konfiguriert ist, um an der Struktur (S) befestigt zu werden, und andererseits einen Haltehalbflansch (4), der konfiguriert ist, um mit dem Befestigungshalbflansch (3) zusammengefügt zu werden, und der zu diesem Befestigungshalbflansch (3) ergänzend ist, umfasst, wobei diese Halbflansche (3 ; 4) jeweils einen starren Körper (30 ; 40) sowie jeweils gegenüber dem anderen Halbflansch (4 ; 3) einerseits mindestens eine Vertiefung (32 ; 42) umfassen, die jeweils konfiguriert ist, um einen Schlauch aufzunehmen, der jeweils gegenüber einer anderen Vertiefung (42; 32), welche der andere Halbflansch (4 ; 3) umfasst, angeordnet ist und jeweils eine solche andere Vertiefung (42 ; 32) ergänzt, um eine Aufnahme (5) zum Aufnehmen des Schlauches oder eines der Schlauchen zu bilden;
- elektrische Verbindungsmittel (6), die konfiguriert sind, um die Struktur (S) und den Schlauch oder die Schlauchen elektrisch zu verbinden, und welche der Befestigungshalbflansch (3) umfasst;
wobei die elektrischen Verbindungsmittel (6) mindestens ein Polster (7) umfassen, das jeweils aus einem flexiblen elektrisch leitfähigen Material hergestellt ist, das jeweils die Vertiefung (32) oder eine der Vertiefungen (32) des Befestigungshalbflansches (3) füllt und das jeweils konfiguriert ist, um elektrisch mit dem Schlauch oder mit einem der Schlauchen zusammenzuwirken;
**dadurch gekennzeichnet, dass** die elektrischen Verbindungsmittel mindestens einen Drücker (8) umfassen, der jeweils aus einem elektrisch leitfähigen Material hergestellt ist, das jeweils konfiguriert ist, um elektrisch mit der Struktur (S) sowie mit dem Polster (7) oder mit einem der Polster (7) des Befestigungshalbflansches (3) zusammenzuwirken, das jeweils beweglich in Verschiebung zwischen einer außerhalb des Befestigungshalbflansches (3) ausgefahrenen Position und einer innerhalb dieses Befestigungshalbflansches (3) zurückgezogenen Position ist.

2. Haltevorrichtung (1) nach Anspruch 1, **dadurch gekennzeichnet, dass** der Haltehalbflansch (4) mindestens ein Polster (11) umfasst, das jeweils aus einem flexiblen Material hergestellt ist, das jeweils die Vertiefung (42) oder eine der Vertiefungen (42) des Haltehalbflansches (4) füllt, das jeweils gegenüber dem Polster (11) oder einem der Polster (11) des Befestigungshalbflansches (3) angeordnet ist.

3. Haltevorrichtung (1) nach irgendeinem der vorhergehenden Ansprüche, **dadurch gekennzeichnet, dass** das bzw. die Polster (7 ; 11) aus einem komprimierbaren Material hergestellt sind.

4. Haltevorrichtung (1) nach irgendeinem der vorhergehenden Ansprüche, **dadurch gekennzeichnet, dass** das bzw. die Polster (7 ; 11) aus Silikon hergestellt sind.

5. Haltevorrichtung (1) nach irgendeinem der vorhergehenden Ansprüche, **dadurch gekennzeichnet, dass** der bzw. die Drücker (8) aus einem starren und/oder metallischen Material, nämlich aus Aluminium, hergestellt sind.

6. Haltevorrichtung (1) nach irgendeinem der vorhergehenden Ansprüche, **dadurch gekennzeichnet, dass** der Befestigungshalbflansch (3) eine Befestigungsfläche (33) umfasst, die dazu bestimmt ist, in Richtung auf die Struktur (S) ausgerichtet zu werden, sogar um mit dieser Struktur (S) zusammenzuwirken, und relativ zu der sich der bzw. die Drücker (8) vorstehend erstrecken, und zwar in der ausgefahrenen Position.

7. Haltevorrichtung (1) nach irgendeinem der vorhergehenden Ansprüche, **dadurch gekennzeichnet, dass** der Befestigungshalbflansch (3) einerseits eine Befestigungsfläche (33), die dazu bestimmt ist, in Richtung auf die Struktur (S) ausgerichtet zu werden, sogar um mit dieser Struktur (S) zusammenzuwirken, und andererseits mindestens ein durchgehendes Loch (34) umfasst, das sich jeweils von dieser Befestigungsfläche (33) bis zur Vertiefung (32) oder bis zu einer der Vertiefungen (32) dieses Befestigungshalbflansches (3) erstreckt und jeweils den Drücker (8) oder einen der Drücker (8) translationsbeweglich in einem solchen durchgehenden Loch (34) aufnimmt.

8. Haltevorrichtung (1) nach irgendeinem der vorhergehenden Ansprüche, **dadurch gekennzeichnet, dass** der Befestigungshalbflansch (3) mindestens eine Mulde (9) umfasst, die jeweils aus einem starren Material hergestellt ist und jeweils teilweise die Innenfläche (71) des Polsters (7) oder eines der Polster (7) dieses Befestigungshalbflansches (3) füllt, die jeweils konfiguriert ist, um mit dem Schlauch oder mit einem der Schlauchen zusammenzuwirken, sowie um zwischen einem solchen Polster (7) und einem solchen Schlauch angeordnet zu werden.

9. Haltevorrichtung (1) nach Anspruch 8, **dadurch gekennzeichnet, dass** die Mulde bzw. Mulden (9) des Befestigungshalbflansches (3) jeweils eine durchgehende Öffnung (90) umfassen, in Richtung auf die der Drücker (8) bzw. einer der Drücker (8) ausgerichtet und in Verschiebung beweglich ist.

10. Haltevorrichtung (1) nach Anspruch 2, **dadurch gekennzeichnet, dass** der Haltehalbflansch (4) mindestens eine Mulde (12) umfasst, die jeweils aus einem starren Material hergestellt ist, die jeweils die Innenfläche (111) des Polsters (11) oder eines der Polster (11) dieses Haltehalbflansches (4) füllt, und jeweils konfiguriert, um mit dem Schlauch oder mit einem der Schlauchen zusammenzuwirken, sowie um zwischen einem solchen Polster (11) und einem solchen Schlauch angeordnet zu werden.

11. Haltevorrichtung (1) nach irgendeinem der Ansprüche 8 bis 10, **dadurch gekennzeichnet, dass** die Mulde bzw. Mulden (9 ; 12) einen Innenradius aufweisen, der dem Außenradius des Schlauches entspricht.

12. Haltevorrichtung (1) nach irgendeinem der Ansprüche 8 bis 11, **dadurch gekennzeichnet, dass** die Mulde bzw. Mulden (9 ; 12) jeweils seitlich und beiderseits des Polsters (7 ; 11) oder eines der Polster (7 ; 11) eine Schürze (10 ; 13) umfassen, die mindestens einen Teil der Seite (72 ; 112) dieses Polsters bzw. dieser Polster (7 ; 11) bedeckt.

## Claims

1. Device for holding (1) at least one electrically conducting hose on an electrically conducting structure (S) with an electrical connection between such a structure (S) and at least one such hose, this holding device (1) includes:
- a flange (2) including, on the one hand, a fastening half-flange (3) configured to be fastened to the structure (S) and, on the other hand, a holding half-flange (4) configured to be assembled with the fastening half-flange (3), and complementary to this fastening half-flange (3), these half-flanges (3 ; 4) each including a rigid body (30 ; 40) as well as each, facing the other half-flange (4 ; 3), on the one hand, at least one recess (32 ; 42), each configured to receive a hose, each arranged opposite another recess (42 ; 32), which the other half-flange (4 ; 3) includes, and each supplementing such other recess (42 ; 32) in order to form an accommodation (5) for receiving the hose or one of the hoses;
- electrical connection means (6), which are configured to electrically connect the structure (S) and the hose or hoses, and which the fastening half-flange (3) includes;
wherein the electrical connection means (6) include at least one pad (7), each made of a flexible electrically conducting material, each lining the recess (32) or one of the recesses (32) of the fastening half-flange (3), and each configured to electrically cooperate with the hose or with one of the hoses;
wherein the electrical connection means include at least one pusher (8), each made of an electrically conducting material, each configured to electrically cooperate with the structure (S) as well as with the pad (7) or one of the pads (7) of the fastening half-flange (3), each movable in displacement between an unfolded position outside the fastening half-flange (3) and a retracted position inside this fastening half-flange (3).

2. Holding device (1) according to claim 1, wherein the holding half-flange (4) includes at least one pad (11), each made of a flexible material, each filling the recess (42) or one of the recesses (42) of the holding half-flange (4), and each arranged opposite the pad (11) or one of the pads (11) of the fastening half-flange (3).

3. Holding device (1) according to any one of the preceding claims, wherein the pad or pads (7 ; 11) are made of a compressible material.

4. Holding device (1) according to any one of the preceding claims, wherein the pad or pads (7 ; 11) are made of silicone.

5. Holding device (1) according to any one of the preceding claims, wherein the pusher or pushers (8) are made of a rigid and/or metallic material, namely of aluminum.

6. Holding device (1) according to any one of the preceding claims, wherein the fastening half-flange (3) has a fastening face (33) aimed at being oriented towards the structure (S), even at cooperating with this structure (S), and with respect to which the pusher or pushers (8) extend projecting, in the unfolded position.

7. Holding device (1) according to any one of the preceding claims, wherein the fastening half-flange (3) includes, on the one hand, a fastening face (33) aimed at being oriented towards the structure (S), even at cooperating with this structure (S) and, on the other hand, at least one through hole (34), each extending from this fastening surface (33) and to the recess (32) or to one of the recesses (32) of this fastening half-flange (3) and each receiving the pusher (8) or one of the pushers (8) movable in translation inside such a through hole (34).

8. Holding device (1) according to any one of the preceding claims, wherein the fastening half-flange (3) includes at least one cradle (9), each made of a rigid material, each partially filling the inner face (71) of the pad (7) or of one of the pads (7) of this fastening half-flange (3), each configured to cooperate with the hose or with one of the hoses as well as to be interposed between such a pad (7) and such a hose.

9. Holding device (1) according to claim 8, wherein the cradle or cradles (9) of the fastening half-flange (3) each include a through opening (90) towards which the pusher (8) or one of the pushers (8) is oriented and is movable in displacement.

10. Holding device (1) according to claim 2, wherein the holding half-flange (4) includes at least one cradle (12), each made of a rigid material, each lining the internal face (111) of the pad (11) or of one of the pads (11) of this holding half-flange (4), and each configured to cooperate with the hose or with one of the hoses as well as to be interposed between such a pad (11) and such a hose.

11. Holding device (1) according to any one of claims 8 to 10, wherein the cradle or cradles (9 ; 12) have an inner radius corresponding to the outer radius of the hose.

12. Holding device (1) according to any one of claims 8 to 11, wherein the cradle or cradles (9 ; 12) each include, laterally and on either side of the pad (7 ; 11) or of one of the pads (7 ; 11), a skirt (10 ; 13) covering at least part of the side (72 ; 112) of this or these pads (7 ; 11).
